Europäisches Patentamt

**(19)** European Patent Office

Office européen des brevets

**(11)** Publication number : **0 495 595 A2**

## **(12)** EUROPEAN PATENT APPLICATION

**(21)** Application number : **92300240.6**

**(22)** Date of filing : **10.01.92**

**(51)** Int. Cl.$^5$ : **G06F 3/033**

**(30)** Priority : **11.01.91 US 640345**

**(43)** Date of publication of application :
**22.07.92 Bulletin 92/30**

**(84)** Designated Contracting States :
**DE FR GB**

**(71)** Applicant : **NCR CORPORATION**
**World Headquarters**
**Dayton, Ohio 45479 (US)**

**(72)** Inventor : **Protheroe, Robert Llewellyn**
**606 Clark Street**
**Cambridge, Ohio 43725 (US)**
Inventor : **Memarzadeh, Kazem**
**427 Sherman Avenue**
**Cambridge, Ohio 43725 (US)**
Inventor : **Crooks, John Fredrick**
**1340 McFarland Road, Apt. 1**
**Cambridge, Ohio 43725 (US)**

**(74)** Representative : **Robinson, Robert George**
**International Patent Department NCR Limited**
**915 High Road North Finchley**
**London N12 8QJ (GB)**

**(54) Display apparatus and method of image characteristic adjustment.**

**(57)** The invention provides for display apparatus (10) comprising a display screen (13,14), input means (16) arranged for movement on said screen (13,14) so as to input matter for display on said screen (13,14), and control means (18) for altering an image characteristic of the displayed matter, in which said input means (16) is operable in an input mode or in image characteristic control mode, and in that, when said input means is in said image characteristic control mode, said control means (18) is responsive to the position of said input means (16) on said screen so as to alter said image characteristic by way of said input means (16). Also, the invention provides for a method of display adjustment in which image characteristic adjustment is carried out by apparatus as described above.

FIG. 1

EP 0 495 595 A2

The present invention relates to display apparatus and to a method of adjusting an image characteristic of a display such as a liquid crystal display or a cathode ray tube. In particular, but not exclusively, the invention relates to a method of adjusting such a characteristic by manual movement of an input device connected for controlling the information content of the image as well as the appearance thereof.

As used herein the term "image characteristic" refers to an overall quality feature such as brightness, contrast or the like.

Data processing systems typically include display devices for visually displaying information in the form of electronic images, and such display devices are often in the form of a liquid crystal display (LCD) or a cathode ray tube (CRT). In that system, an LCD module is positioned directly behind a transparent interactive digitizer element, and fluorescent tubes are positioned in back of the LCD module to provide back lighting for the module.

The system of the aforementioned application includes a stylus which is operatively connected to the digitizer and a microprocessor which is operatively connected to the display device and the digitizer whereby, as the stylus is used to write on the transparent interactive element of the digitizer, the LCD module is driven to display the image traced by the stylus. Further, the microprocessor may also provide predetermined background images such as standardized forms to be displayed by the LCD module to thereby provide a guide for data input by the stylus.

Due to varying lighting and temperature conditions in the area surrounding the display device, it is often desirable to adjust the image contrast. In prior art devices, such an adjustment is usually performed by input means such as a manually rotated adjustment knob located near the display screen. Such an arrangement is disadvantageous in that it requires that additional exterior space be provided so as to accommodate and access the adjustment controls. Also, the adjustment control adds to the overall cost of the system.

The present invention therefore seeks to provide means for adjusting an image characteristic of a display device which eliminates the need for bulky and expensive manual controls.

According to the present invention there is provided display apparatus comprising a display screen, input means arranged for movement on said screen so as to input matter for display on said screen, and control means for altering an image characteristic of the displayed matter, characterized in that said input means is operable in an input mode or in an image characteristic control mode, and in that, when said input means is in said image characteristic control mode, said control means is responsive to the position of said input means on said screen so as to alter said image characteristic by way of said input means.

The invention is advantageous in that display apparatus is provided having image characteristic adjustment means which has inexpensive and easily manipulated manual control means which do not require additional exterior space for mounting.

As such, the invention also provides for apparatus having an improved method of controlling the appearance of a stylus-operated display.

The invention is described further hereinafter, by way of example only, with reference to the accompanying drawings in which:-

Fig. 2 is a plan view of a digitizer screen and stylus for adjusting the contrast of the display device of Fig. 1; and

Fig. 3 is a flow chart depicting the steps of the method of adjusting the contrast for the display device of Fig. 1.

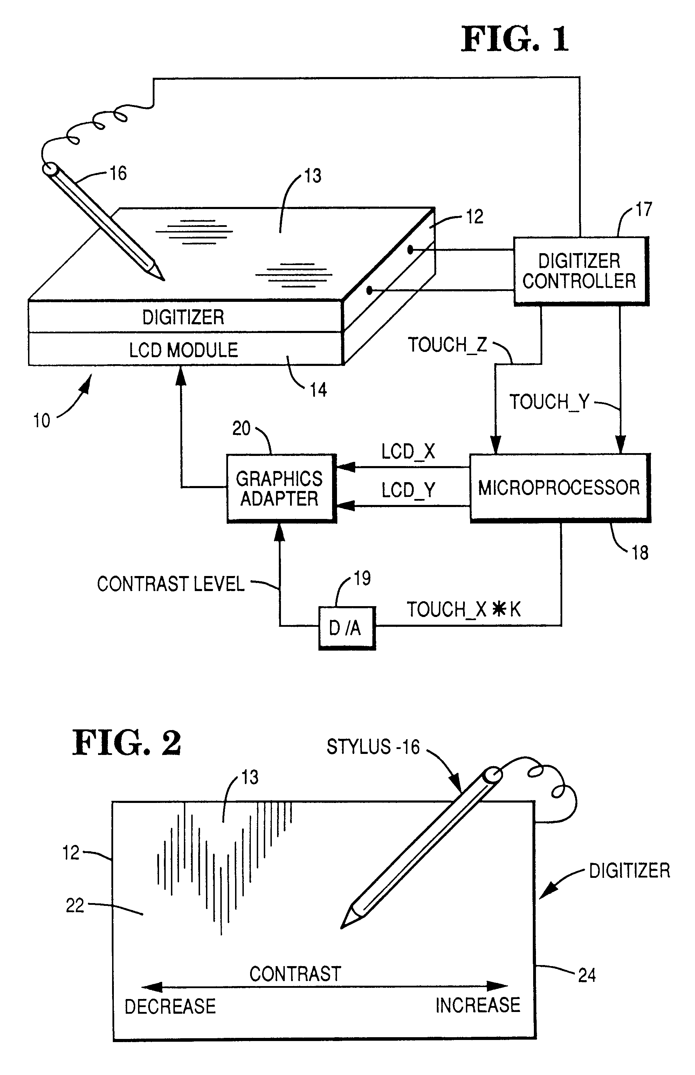

Fig. 1 shows an apparatus which may be used to adjust an image or appearance characteristic of a display device in accordance with the present invention. The apparatus comprises a display device 10 which preferably includes a positional input device or digitizer 12 having a transparent surface 13 positioned over an LCD module 14. In addition, a stylus 16 is provided for enabling a signature or other marking to be sensed by the digitizer and captured by LCD module 14. For this purpose stylus 16 and transparent surface 13 are connected to a digitizer controller 17. A microprocessor (not illustrated) within digitizer controller 17 receives and processes the potentials between stylus 16 and reference terminals attached to surface 13 and generates a pair of digital signals touch x and touch y representing the position of the tip of the stylus. For normal use as a write capture device, touch x and touch y are relayed to another microprocessor 18 which generates image position commands lcd x and lcd y for a graphics adapter 20. Graphics adapter 20 then controls the operation of LCD module 14. By way of example, digitizer 12 may be a ScreenWriter controller/digitizer/pen marketed by Micro Touch Systems, Inc., Wilmington, Massachusetts. Operating details for another suitable digitizer are disclosed in Kable U.S. Patent 4,678,869. LCD module 14 may be a Model EG7500 marketed by Epson America, Inc., Torrance, California, and graphics adapter 20 may be a Display Master model YDM6420 graphics adapter sold by Yamaha Corporation of America, San Jose, California.

Contrast adjustment is initiated by depressing a key (not illustrated) which generates an interrupt signal to command microprocessor 18 to begin a contrast adjustment sequence. During that sequence microprocessor 18 multiplies touch x by a suitable constant and directs the resulting product to a digital to analog converter 19. D/A 19 then generates an appropriate contrast control signal for graphics adapter 20. This signal has electrical characteristics similar to the signal generated in the prior art by operation of a rotary knob.

As depicted in Fig. 2, the contrast of the LCD is adjusted by moving the stylus 16 to a particular location on the surface of the digitizer 12 corresponding to a desired contrast setting. For example, the stylus 16 may be moved to the left, closer to a location 22 on the surface 13 to decrease the contrast, or rightwardly toward location 24 to increase the contrast of the display.

As described above, microprocessor 18 provides a driving signal for graphics adapter 20 which varies in direct proportion to the linear movement of the stylus 16 in the x direction across the surface of the digitizer 12. However, the driving signal could respond to movement in any direction, or even movement along a curved line. Also the response need not be linear. Microprocessor 18 could easily provide a sinusoidal, logarithmic, or other response. Furthermore, digitizer 12 need not be equipped with a stylus but could comprise means for sensing the touch of a finger or other object.

When the control key is depressed to initiate a contrast adjustment sequence, the keyboard generates an interrupt signal which tells microprocessor 18 to execute the appropriate routine. That routine includes instructions directing the microprocessor to wait until stylus 16 has been placed on the surface 13. The sequence is terminated when the stylus is lifted from the surface 13. The contrast is adjusted to the setting corresponding to the last point of contact between the stylus 16 and the surface of the digitizer 12.

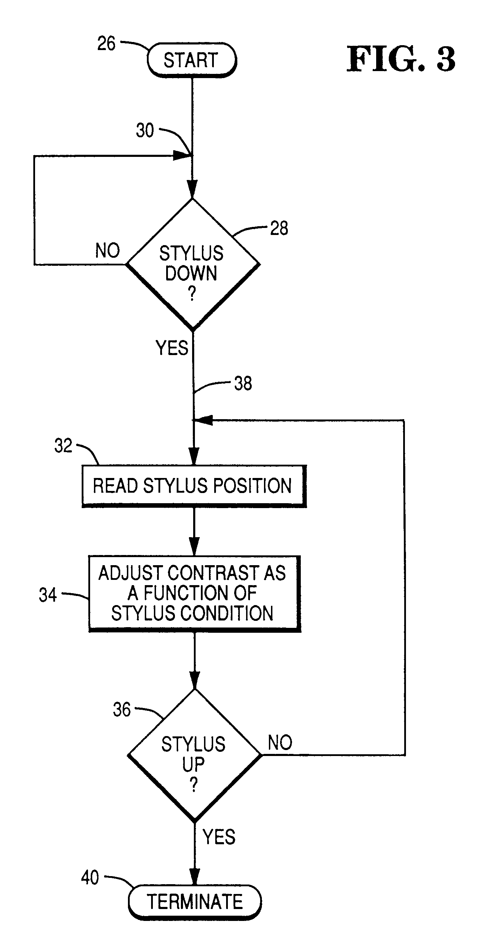

Fig. 3 illustrates the steps of the operation performed by the microprocessor during a contrast adjustment sequence. The sequence is initiated at the start block 26 by depression of the control key and the process continues to block 28 where microprocessor 18 checks for a signal from the digitizer 12 indicating that the stylus 16 is in contact with the digitizer surface 13. If no signal is being received, the process loops back to node 30 and returns to block 28 to continue checking for a signal.

When the stylus contacts the surface of the digitizer 12, the process proceeds to block 32 where the positional coordinates of the stylus 16 on the surface 13 are determined and continues to block 34 where the microprocessor control circuit 18 provides a signal to drive graphics adapter 20 to adjust the contrast of the LCD module 14 to a level corresponding to the positional coordinates of the stylus 16.

The process then proceeds to block 36 to where the microprocessor control circuit 18 checks to see if the stylus 16 has been lifted from the digitizer surface 13. If the stylus 16 is still in contact with the digitizer 12, the process returns to node 38 where the positional coordinates of the stylus 16 are again calculated to provide another contrast adjustment to the LCD module 14. Alternatively, when the stylus is lifted from the digitizer 12, the process proceeds from block 36 to block 40, thus terminating the adjustment process or sequence.

It should be noted that the above-described method of adjustment may be implemented for altering visual output parameters other than the contrast of an LCD module. For example, the brightness of a back light for an LCD module could be adjusted, or if a cathode ray tube is used, the brightness or vertical hold could be adjusted using a similar method.

Further, other positional input devices, such as a mouse, may be used to manually adjust the visual output parameter of the display device.

The present method for adjusting an image characteristic is particularly adapted for use in combination with a digitizer. When so used, a predetermined area of the digitizer may be restricted for use in connection with image appearance control. For such an arrangement the micro-processor may be programmed to initiate the sub-routine shown in the flow chart of Fig. 3, without the use of a control key whenever the stylus is placed in the restricted area. When the stylus is placed in other areas of the digitizer, the microprocessor may perform other operations such as a write capture operation.

## Claims

1. Display apparatus (10) comprising a display screen (13,14), input means (16) arranged for movement on said screen (13,14) so as to input matter for display on said screen (13,14), and control means (18) for altering an image characteristic of the displayed matter, characterized in that said input means (16) is operable in an input mode or in an image characteristic control mode, and in that, when said input means is in said image characteristic control mode, said control means (18) is responsive to the position of said input means (16) on said screen so as to alter said image characteristic by way of said input means (16).

2. Apparatus according to claim 1, characterized by a control key operation of which is effective to cause said input means (16) to operate in said image characteristic control mode.

3. Apparatus according to claim 1 or 2, characterized in that said input means comprises a digitizer (12) arranged in said screen (13,14) and a stylus (16) operatively connected to said digitizer.

4. Apparatus according to claim 3, characterized in that said display screen (13,14) comprises a liquid crystal display screen arranged to display the path of said stylus (16) thereon.

5. A method of altering an image characteristic of a display characterised in that the altering of said image characteristic is carried out by apparatus according to claim 1, 2, 3 or 4.

6. A method according to claim 5, characterized in that once in said image characteristic control mode, operation of said control means (18) is initiated upon contact of said input means (16) on said screen (13,14).

7. A method according to claim 6, characterized in that said image characteristic is determined in response to the co-ordinate position of the initial point of contact of said input means (16) on said screen (13,14) when said input means (16) is in said image characteristic control mode.

8. A method according to claim 6, characterized in that said image characteristic is determined in response to the co-ordinate position at which said input means (16) is moved out of contact with said screen when said input means (16) is in said image characteristic control mode.

9. A method according to claim 5 or 6, characterized in that said image characteristic is determined in response to the distance moved by said input means (16) on said screen (13,14) when said input means (16) is in said image characteristic control mode.

10. A method according to any one of claims 5 to 9, characterized in that said image characteristic comprises the contrast of the display,

# FIG. 1

# FIG. 2

# FIG. 3

26 START

30

28 STYLUS DOWN ?

NO

YES

38

32 READ STYLUS POSITION

34 ADJUST CONTRAST AS A FUNCTION OF STYLUS CONDITION

36 STYLUS UP ?

NO

YES

40 TERMINATE